# EUROPÄISCHE PATENTSCHRIFT

(11) **EP 3 652 585 B1**
(45) Veröffentlichungstag und Bekanntmachung des Hinweises auf die Patenterteilung: **22.02.2023**
(21) Anmeldenummer: 18735598.7
(22) Anmeldetag: 10.07.2018
(51) Int. Cl.: G02F 1/133, G02F 1/1334, B32B 17/10

(54) **VERFAHREN ZUR STEUERUNG EINER VORRICHTUNG MIT FUNKTIONSELEMENTEN DIE ELEKTRISCH STEUERBARE OPTISCHE EIGENSCHAFTEN AUFWEISEN**
METHOD FOR CONTROLLING A DEVICE WITH FUNCTIONAL ELEMENTS HAVING ELECTRICALLY CONTROLLABLE OPTICAL PROPERTIES
PROCÉDÉ DE COMMANDE D'UN DISPOSITIF COMPORTANT DES ÉLÉMENTS FONCTIONNELS AYANT DES PROPRIÉTÉS OPTIQUES CONTRÔLABLES ÉLECTRIQUEMENT

(30) Priorität: 12.07.2017 EP 17180842
(43) Veröffentlichungstag der Anmeldung: 20.05.2020
(73) Patentinhaber: SAINT-GOBAIN GLASS FRANCE, 92400 Courbevoie (FR)
(72) Erfinder: MANZ, Florian, 52064 Aachen (DE); WEBER, Patrick, 52477 Alsdorf (DE); EFFERTZ, Christian, 52080 Aachen (DE); DRAGAS, Thorsten, 52511 Geilenkirchen (DE)
(74) Vertreter: Gebauer, Dieter Edmund
(86) Internationale Anmeldenummer: PCT/EP2018/068606
(87) Internationale Veröffentlichungsnummer: WO 2019/011891

(56) Entgegenhaltungen:
- JP-A- 2013 072 895
- US-A1- 2006 152 258
- US-A1- 2017 090 224

## Beschreibung

Die Erfindung betrifft ein Verfahren zur Steuerung einer Vorrichtung mit mindestens einem Funktionselement mit elektrisch steuerbaren optischen Eigenschaften.

Im Fahrzeugbereich und im Baubereich werden oftmals Verbundscheiben mit elektrisch steuerbaren Funktionselementen zum Sonnenschutz oder zum Sichtschutz eingesetzt.

So sind beispielsweise Windschutzscheiben bekannt, in denen eine Sonnenblende in Form eines Funktionselements mit elektrisch steuerbaren optischen Eigenschaften integriert ist. Dabei ist insbesondere die Transmission oder das Streuverhalten von elektromagnetischer Strahlung im sichtbaren Bereich elektrisch steuerbar. Die Funktionselemente sind in der Regel folienartig und werden in eine Verbundscheibe einlaminiert oder an diese angeklebt. Bei Windschutzscheiben kann der Fahrer das Transmissionsverhalten der Scheibe selbst gegenüber Sonnenstrahlung steuern. So kann auf eine herkömmliche mechanische Sonnenblende verzichtet werden. Dadurch kann das Gewicht des Fahrzeugs reduziert werden und es wird Platz im Dachbereich gewonnen. Zudem ist das elektrische Steuern der Sonnenblende für den Fahrer komfortabler als das manuelle Herunterklappen der mechanischen Sonnenblende.

Windschutzscheiben mit derartigen elektrisch steuerbaren Sonnenblenden sind beispielsweise bekannt aus DE 102013001334 A1, DE 102005049081 B3, DE 102005007427 A1 und DE 102007027296 A1.

Typische elektrisch steuerbare Funktionselemente enthalten elektrochrome Schichtstrukturen oder Suspended Particle Device (SPD)-Folien. Weitere mögliche Funktionselemente zur Realisierung eines elektrisch steuerbaren Sonnenschutzes sind sogenannte PDLC-Funktionselemente (*polymer dispersed liquid crystal*)*.* Deren aktive Schicht enthält Flüssigkristalle, welche in eine Polymermatrix eingelagert sind. Transparente Flächenelektroden sind beidseitig zur aktiven Schicht angeordnet, so dass ein elektrisches Feld in der aktiven Schicht angelegt werden kann. Wird keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Das PDLC-Funktionselement wirkt weniger durch Herabsetzung der Gesamttransmission, sondern durch Erhöhung der Streuung, um den Blendschutz zu gewährleisten. US 2017/090224 A1 und JP 2013 072895 A beschreiben beispielhaft solche PDLC-Funktionselemente.

US 2006/152258 A1 verweist auf den Ansatz ein trapezförmiges Signal anstelle eines rechteckigen Signals zu verwenden.

Der vorliegenden Erfindung liegt daher die Aufgabe zugrunde, ein verbessertes Verfahren zur Steuerung einer Vorrichtung mit Funktionselementen mit elektrisch steuerbaren optischen Eigenschaften bereitzustellen, die insbesondere hinsichtlich ihrer Alterungsbeständigkeit verbessert ist.

Die Aufgabe der vorliegenden Erfindung wird durch ein Verfahren zur Steuerung einer Vorrichtung gemäß dem unabhängigen Anspruch 1 gelöst. Bevorzugte Ausführungen gehen aus den Unteransprüchen hervor.

Eine Vorrichtung zum Betreiben von Funktionselementen mit elektrisch steuerbaren optischen Eigenschaften, umfasst mindestens:
- eine elektrische Energiequelle mit einer Ausgangsspannung U,
- mindestens ein Funktionselement mit elektrisch steuerbaren optischen Eigenschaften und
- mindestens zwei Zuleitungen, mit denen die elektrische Energiequelle und das Funktionselement verbunden sind,
wobei die Ausgangsspannung U eine Wechselspannung mit
- einer Frequenz f von 40 Hz bis 210 Hz, bevorzugt von 45 Hz bis 105 Hz und besonders bevorzugt von 49 Hz bis 69 Hz,
- einer maximalen Amplitude Uₘₐₓ von 24 V bis 100 V, bevorzugt von 50 V bis 75 V und besonders bevorzugt von 60 V bis 70 V
- und einer Flankensteigung im Bereich der Ausgangsspannung U zwischen -80% Uₘₐₓ und 80% Uₘₐₓ von 0,05*Uₘₐₓ/100µs bis 0,1*Uₘₐₓ/100µs und im Bereich der Ausgangsspannung U zwischen 80% Uₘₐₓ und -80% Uₘₐₓ von -0,05*Uₘₐₓ/100 µs bis -0,1*Uₘₐₓ/100 µs
aufweist.

Das bedeutet, die Vorrichtung enthält mindestens ein Funktionselement und weitere Einrichtungen für deren Betrieb.

Unter der Flankensteigung ist wie mathematisch üblich die Ableitung der Ausgangsspannung U über der Zeit (dU(t)/dt) zu verstehen, d.h. die lokale Flankensteigung zu jedem Zeitpunkt innerhalb des jeweils angegebenen Ausgangsspannungsbereichs U (also zwischen -80% Uₘₐₓ und 80% Uₘₐₓ (aufsteigende Flanke) bzw. zwischen 80% Uₘₐₓ und -80% Uₘₐₓ (absteigende Flanke)). Die Flankensteigung ist nicht notwendigerweise konstant innerhalb der jeweiligen aufsteigenden oder absteigenden Flanke. Wichtig ist lediglich, dass die Flankensteigung im jeweiligen Bereich, die erfindungsgemäßen Bereiche der Flankensteigung nicht verlässt.

In einer bevorzugten Ausführungsform der Erfindung kann die Ausgangsspannung U auch im jeweiligen Bereich einer aufsteigenden oder absteigenden Flanke linear mit der Zeit t verlaufen, so dass die Flankensteigung im jeweiligen Bereich konstant ist.

Die maximale Amplitude Uₘₐₓ ist bevorzugt konstant beziehungsweise über einen bestimmten Temperaturbereich oder unterhalb einer bestimmten Schwellentemperatur konstant.

Erfindungsgemäß beträgt die Flankensteigung im Bereich der Ausgangsspannung U
zwischen -100% Uₘₐₓ bis -80% Uₘₐₓ und zwischen 80% Uₘₐₓ bis 100% Uₘₐₓ kleiner 0,05*Uₘₐₓ/100µs (bevorzugt zwischen 0 und 0,05*Uₘₐₓ/100µs) und
zwischen 100% Uₘₐₓ bis 80% Uₘₐₓ und zwischen -80% Uₘₐₓ bis -100% Uₘₐₓ größer -0,05*Uₘₐₓ/100µs (bevorzugt zwischen -0,05*Uₘₐₓ/100µs und 0).

In einer vorteilhaften erfindungsgemäßen Ausgestaltung beträgt die Flankensteigung im Bereich der Ausgangsspannung U
zwischen -90% Uₘₐₓ bis 90% Uₘₐₓ von 0,05*Uₘₐₓ/100µs bis 0,1*Uₘₐₓ/100µs und
zwischen 90% Uₘₐₓ bis -90% Uₘₐₓ von -0,05*Uₘₐₓ/100µs bis -0,1*Uₘₐₓ/100µs.

In einer vorteilhaften Weiterbildung beträgt die Flankensteigung im Bereich der Ausgangsspannung U
zwischen -100% Uₘₐₓ bis -90% Uₘₐₓ und zwischen 90% Uₘₐₓ bis 100% Uₘₐₓ kleiner 0,05*Uₘₐₓ/100µs und
zwischen 100% Uₘₐₓ bis 90% Uₘₐₓ und zwischen -90% Uₘₐₓ bis -100% Uₘₐₓ größer -0,05*Uₘₐₓ/100µs.

Ein Funktionselement ist vorteilhafterweise an einer Außenseite oder an einer Innenseite einer Einzelscheibe oder einer Verbundscheibe, oder im Inneren einer Verbundscheibe angeordnet.

Die Vorrichtung weist ein Thermometer auf, welches am Funktionselement angeordnet ist. Der maximale Abstand zwischen Thermometer und Funktionselement beträgt bevorzugt 10 mm und besonders bevorzugt 1 mm. Das Thermometer ist insbesondere unmittelbar am Funktionselement angeordnet.

Das Thermometer ist beispielsweise ein Widerstandsthermometer oder allgemein ein Thermistor mit einem negativen Temperaturkoeffizienten (NTC) oder einem positiven Temperaturkoeffizienten (PTC), bevorzugt in Miniaturbauweise.

Das Thermometer ist mit der Energiequelle gekoppelt, beispielsweise über Signalleitungen. Die Energiequelle ist derart ausgestaltet, dass die Temperatur am Thermometer gemessen werden kann und die maximale Ausgangsspannung Uₘₐₓ an die Temperatur angepasst wird.

Die Erfindung zeigt ein Verfahren zur Steuerung der Vorrichtung, wobei unter anderem
a) eine Temperatur T am Thermometer gemessen wird und
b) die maximale Amplitude Uₘₐₓ der Ausgangsspannung U an die Temperatur angepasst wird, wobei ab einer bestimmten Schwellentemperatur Tₛ mit steigender Temperatur T die maximale Amplitude Uₘₐₓ erniedrigt wird und bis zu der Schwellentemperatur T_{S} mit fallender Temperatur T die maximale Amplitude Uₘₐₓ erhöht wird.

Für Temperaturen T unterhalb der Schwellentemperatur T_{S} bleibt wird die maximale Amplitude Uₘₐₓ bevorzugt konstant gehalten.

Wie in Patentanspruch 9 angegeben, gilt gemäß einer Ausgestaltung des erfindungsgemäßen Verfahrens:
für T ≤ T_{S} gilt: Uₘₐₓ = U_{max,k} = konstant mit 50 V ≤ U_{max,k} ≤ 75 V und
für T > T_{S} gilt: 50 V - 1,5 V/°C * (T-T_{S}) ≤ Uₘₐₓ ≤ 75 V - 0,5 V/°C * (T-T_{S})
und T_{S}= konstant mit 40°C ≤ T_{S} ≤ 60°C.

Wie in Patentanspruch 10 angegeben, gilt gemäß einer weiteren Ausgestaltung des erfindungsgemäßen Verfahrens:
für T ≤ Ts gilt: Uₘₐₓ = U_{max,k} = konstant mit 50 V ≤ U_{max,k} ≤ 75 V und
für T > T_{S} gilt: Uₘₐₓ = U_{max,k} + g (T-T_{S}) mit -1,5 V/°C ≤ g ≤ -0,5 V/°C
und T_{S}= konstant mit 40°C ≤ T_{S} ≤ 60°C.

Wie in Patentanspruch 11 angegeben, gilt gemäß einer weiteren Ausgestaltung des erfindungsgemäßen Verfahrens:
für T ≤ T_{S} gilt: Uₘₐₓ = U_{max,k} = konstant mit 60 V ≤ U_{max,k} ≤ 70 V und
für T > T_{S} gilt: Uₘₐₓ = U_{max,k} + g (T-T_{S}) mit
g = konstant und -1,5 V/°C ≤ g ≤ -0,5 V/°C und
T_{S}= konstant mit 40°C ≤ T_{S} ≤ 60°C.

U_{max,u} ist eine untere maximale Amplitude, U_{max,o} ist eine obere maximale Amplitude; gᵤ ist eine untere Flankensteigung; gₒ ist eine obere Flankensteigung.

Eine Verbundscheibe umfasst mindestens:
- eine Stapelfolge aus einer Außenscheibe, einer ersten Zwischenschicht, einer zweiten Zwischenschicht und einer Innenscheibe, wobei die Zwischenschichten jeweils mindestens eine thermoplastische polymere Folie mit mindestens einem Weichmacher enthalten, und
- zwischen der ersten Zwischenschicht und der zweiten Zwischenschicht zumindest abschnittsweise ein Funktionselement mit elektrisch steuerbaren optischen Eigenschaften angeordnet ist.

Die Verbundscheibe kann beispielsweise die Windschutzscheibe oder die Dachscheibe eines Fahrzeugs oder eine andere Fahrzeugverglasung sein, beispielsweise eine Trennscheibe in einem Fahrzeug, bevorzugt in einem Schienenfahrzeug oder einem Bus. Alternativ kann die Verbundscheibe eine Architekturverglasung, beispielsweise in einer Außenfassade eines Gebäudes oder eine Trennscheibe im Innern eines Gebäudes sein.

Die Begriffe Außenscheibe und Innenscheibe beschreiben willkürlich zwei verschiedene Scheiben. Insbesondere kann die Außenscheibe als eine erste Scheibe und die Innenscheibe als eine zweite Scheibe bezeichnet werden.

Ist die Verbundscheibe dafür vorgesehen, in einer Fensteröffnung eines Fahrzeugs oder eines Gebäudes einen Innenraum gegenüber der äußeren Umgebung abzutrennen, so wird mit Innenscheibe im Sinne der Erfindung die dem Innenraum (Fahrzeuginnenraum) zugewandte Scheibe (zweite Scheibe) bezeichnet. Mit Außenscheibe wird die der äußeren Umgebung zugewandte Scheibe (erste Scheibe) bezeichnet. Die Erfindung ist aber darauf nicht eingeschränkt.

Die Verbundscheibe enthält ein Funktionselement mit elektrisch steuerbaren optischen Eigenschaften, das zwischen einer ersten Zwischenschicht und einer zweiten Zwischenschicht zumindest abschnittsweise angeordnet ist. Die erste und zweite Zwischenschicht weisen üblicherweise dieselben Abmessungen wie die Außenscheibe und die Innenscheibe auf.

Das Funktionselement ist bevorzugt flächig oder mit anderen Worten folienartig ausgebildet.

In einer vorteilhaften Ausgestaltung einer Verbundscheibe enthält die Zwischenschicht ein Polymer, bevorzugt ein thermoplastisches Polymer.

In einer besonders vorteilhaften Ausgestaltung einer Verbundscheibe enthält die Zwischenschicht mindestens 3 Gew.-%, bevorzugt mindestens 5 Gew.-%, besonders bevorzugt mindestens 20 Gew.-%, noch mehr bevorzugt mindestens 30 Gew.-% und insbesondere mindestens 40 Gew.-% eines Weichmachers. Der Weichmacher enthält oder besteht bevorzugt aus Triethylenglykol-bis-(2-ethylhexanoat).

Weichmacher sind dabei Chemikalien, die Kunststoffe weicher, flexibler, geschmeidiger und/oder elastischer machen. Sie verschieben den thermoelastischen Bereich von Kunststoffen hin zu niedrigeren Temperaturen, so dass die Kunststoffe im Bereich der Einsatz-Temperatur die gewünschten elastischeren Eigenschaften aufweisen. Weitere bevorzugte Weichmacher sind Carbonsäureester, insbesondere schwerflüchtige Carbonsäureester, Fette, Öle, Weichharze und Campher. Weitere Weichmacher sind bevorzugt aliphatische Diester des Tri- bzw. Tetraethylenglykols. Besonders bevorzugt werden als Weichmacher 3G7, 3G8 oder 4G7 eingesetzt, wobei die erste Ziffer die Anzahl der Ethlenglycoleinheiten und die letzte Ziffer die Anzahl der Kohlenstoffatome im Carbonsäureteil der Verbindung bezeichnet. So steht 3G8 für Triethylenglykol-bis-(2-ethylhexanoat), d.h. für eine Verbindung der Formel C₄H₉CH (CH₂CH₃) CO (OCH₂CH₂)₃O₂CCH (CH₂CH₃) C₄H₉.

In einer weiteren besonders vorteilhaften Ausgestaltung einer Verbundscheibe enthält die Zwischenschicht mindestens 60 Gew.-%, bevorzugt mindestens 70 Gew.-%, besonders bevorzugt mindestens 90 Gew.-% und insbesondere mindestens 97 Gew.-% Polyvinylbutyral. Die Dicke jeder Zwischenschicht beträgt bevorzugt von 0,2 mm bis 2 mm, besonders bevorzugt von 0,3 mm bis 1 mm, insbesondere von 0,3 mm bis 0,5 mm, beispielsweise 0,38 mm.

In einer vorteilhaften Ausgestaltung einer Verbundscheibe ist das Funktionselement abschnittsweise oder vollständig von einer Sperrfolie unmittelbar umgeben. Die Sperrfolie ist derart ausgebildet, dass sie die Diffusion von Weichmachern aus der Zwischenschicht durch die Sperrfolie in die aktive Schicht des Funktionselements verhindert, was deren elektrisch steuerbaren optischen Eigenschaften zerstört.

In einer besonders vorteilhaften Ausgestaltung einer Verbundscheibe ist die Sperrfolie Weichmacher-arm, bevorzugt mit einem Weichmacheranteil von weniger als 3 Gew.-%, besonders bevorzugt von weniger als 1 Gew.-% und insbesondere von weniger als 0,5 Gew.-%. Ganz besonders bevorzugt ist die Sperrfolie Weichmacher-frei, das heißt ohne gezielten Zusatz eines Weichmachers. Die Sperrfolie enthält ein Polymer, bevorzugt Polyethylenterephthalat (PET) oder Polyvinylfluorid (PVF) oder besteht daraus. Die Sperrfolie kann auch Weichmacher-armes Polyvinylbutyral (PVB) mit einem Weichmacheranteil von weniger als 3 Gew.-% enthalten.

Das steuerbare Funktionselement umfasst typischerweise eine aktive Schicht zwischen zwei Flächenelektroden. Die aktive Schicht weist die steuerbaren optischen Eigenschaften auf, welche über die an die Flächenelektroden angelegte Spannung gesteuert werden können. Die Flächenelektroden und die aktive Schicht sind typischerweise im Wesentlichen parallel zu den Oberflächen der Außenscheibe und der Innenscheibe angeordnet. Die Flächenelektroden sind mit einer externen Spannungsquelle auf an sich bekannte Art elektrisch verbunden. Die elektrische Kontaktierung ist durch geeignete Verbindungskabel, beispielsweise Folienleiter realisiert, welche optional über sogenannte Sammelleiter (bus bars), beispielsweise Streifen eines elektrisch leitfähigen Materials oder elektrisch leitfähige Aufdrucke, mit den Flächenelektroden verbunden sind.

Die Flächenelektroden sind bevorzugt als transparente, elektrisch leitfähige Schichten ausgestaltet. Die Flächenelektroden enthalten bevorzugt zumindest ein Metall, eine Metalllegierung oder ein transparentes leitfähiges Oxid (transparent conducting oxide, TCO). Die Flächenelektroden können beispielsweise Silber, Gold, Kupfer, Nickel, Chrom, Wolfram, Indium-Zinnoxid (ITO), Gallium-dotiertes oder Aluminium-dotiertes Zinkoxid und / oder Fluordotiertes oder Antimon-dotiertes Zinnoxid enthalten. Die Flächenelektroden weisen bevorzugt eine Dicke von 10 nm bis 2 µm auf, besonders bevorzugt von 20 nm bis 1 µm, ganz besonders bevorzugt von 30 nm bis 500 nm.

Das Funktionselement kann außer der aktiven Schicht und den Flächenelektroden weitere an sich bekannte Schichten aufweisen, beispielsweise Barriereschichten, Blockerschichten, Antireflexionsschichten, Schutzschichten und/oder Glättungsschichten.

Das Funktionselement liegt bevorzugt als Mehrschichtfolie mit zwei äußeren Trägerfolien vor. Bei einer solchen Mehrschichtfolie sind die Flächenelektroden und die aktive Schicht zwischen den beiden Trägerfolien angeordnet. Mit äußerer Trägerfolie ist hier gemeint, dass die Trägerfolien die beiden Oberflächen der Mehrschichtfolie ausbilden. Das Funktionselement kann dadurch als laminierte Folie bereitgestellt werden, die vorteilhaft verarbeitet werden kann. Das Funktionselement ist durch die Trägerfolien vorteilhaft vor Beschädigung, insbesondere Korrosion geschützt. Die Mehrschichtfolie enthält in der angegebenen Reihenfolge zumindest eine Trägerfolie, eine Flächenelektrode, eine aktive Schicht, eine weitere Flächenelektrode und eine weitere Trägerfolie. Die Trägerfolie trägt insbesondere die Flächenelektroden und gibt einer flüssigen oder weichen aktiven Schicht die nötige mechanische Stabilität.

Die Trägerfolien enthalten bevorzugt zumindest ein thermoplastisches Polymer, besonders bevorzugt Weichmacher-armes oder Weichmacher-freies Polyethylenterephthalat (PET). Das ist besonders vorteilhaft im Hinblick auf die Stabilität der Mehrschichtfolie. Die Trägerfolien können aber auch andere Weichmacher-arme oder Weichmacher-freie Polymere enthalten oder daraus bestehen, beispielsweise Ethylenvinylacetat (EVA), Polypropylen, Polycarbonat, Polymethylmetacrylat, Polyacrylat, Polyvinylchlorid, Polyacetatharz, Gießharze, Acrylate, Fluorinierte Ethylen-Propylene, Polyvinylfluorid und/oder Ethylen-Tetrafluorethylen. Die Dicke jeder Trägerfolie beträgt bevorzugt von 0,1 mm bis 1 mm, besonders bevorzugt von 0,1 mm bis 0,2 mm.

Typischerweise weisen die Trägerfolien jeweils eine elektrisch leitfähige Beschichtung auf, die der aktiven Schicht zugewandt ist und als Flächenelektrode fungiert.

In einer weiteren vorteilhaften Ausgestaltung einer Verbundscheibe ist das Funktionselement ein PDLC-Funktionselement (*polymer dispersed liquid crystal*)*.* Die aktive Schicht eines PDLC-Funktionselements enthält Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht.

Grundsätzlich ist es aber auch möglich, andere Arten von steuerbaren Funktionselementen einzusetzen, beispielweise elektrochrome Funktionselemente oder SPD-Funktionselemente (*suspended particle device*)*.* Die erwähnten steuerbaren Funktionselemente und deren Funktionsweise sind dem Fachmann an sich bekannt, so dass an dieser Stelle auf eine ausführliche Beschreibung verzichtet werden kann.

Funktionselemente als Mehrschichtfolien sind kommerziell erhältlich. Das zu integrierende Funktionselement wird typischerweise aus einer Mehrschichtfolie mit größeren Ausmaßen in der gewünschten Form und Größe ausgeschnitten. Dies kann mechanisch erfolgen, beispielsweise mit einem Messer. In einer vorteilhaften Ausführung erfolgt das Ausschneiden mittels eines Lasers. Es hat sich gezeigt, dass die Seitenkante in diesem Fall stabiler ist als beim mechanischen Schneiden. bei mechanisch geschnittenen Seitenkanten kann die Gefahr bestehen, dass sich das Material gleichsam zurückzieht, was optisch auffällig ist und die Ästhetik der Scheibe nachteilig beeinflusst. Zudem ist die Gefahr erhöht, dass sich die Flächenelektroden berühren.

Das Funktionselement ist über einen Bereich der ersten Zwischenschicht mit der Außenscheibe und über einen Bereich der zweiten Zwischenschicht mit der Innenscheibe verbunden. Die Zwischenschichten sind bevorzugt flächig aufeinander angeordnet und miteinander laminiert, wobei das Funktionselement zwischen die beiden Schichten eingelegt ist. Die mit dem Funktionselement überlappenden Bereiche der Zwischenschichten bilden dann die Bereiche, welche das Funktionselement mit den Scheiben verbinden. In anderen Bereichen der Scheibe, wo die Zwischenschichten direkten Kontakt zueinander haben, können sie beim Laminieren derart verschmelzen, dass die beiden ursprünglichen Schichten unter Umständen nicht mehr erkennbar sind und stattdessen eine homogene Zwischenschicht vorliegt.

Eine Zwischenschicht kann beispielsweise durch eine einzige thermoplastische Folie ausgebildet werden. Eine Zwischenschicht kann auch als zweilagiger, dreilagiger oder mehrlagiger Folienstapel ausgebildet sein, wobei die einzelnen Folien gleiche oder unterschiedliche Eigenschaften aufweisen. Eine Zwischenschicht kann auch aus Abschnitten unterschiedlicher thermoplastischer Folien gebildet werden, deren Seitenkanten aneinandergrenzen.

In einer vorteilhaften Weiterbildung einer Verbundscheibe ist der Bereich der ersten oder der zweiten Zwischenschicht, über den das Funktionselement mit der Außenscheibe beziehungsweise der Innenscheibe verbunden ist, getönt oder gefärbt. Die Transmission dieses Bereichs im sichtbaren Spektralbereich ist also herabgesetzt gegenüber einer nicht getönten oder gefärbten Schicht. Der getönte/gefärbte Bereich der Zwischenschicht erniedrigt somit die Transmission der Windschutzscheibe im Bereich der Sonnenblende. Insbesondere wird der ästhetische Eindruck des Funktionselements verbessert, weil die Tönung zu einem neutraleren Erscheinungsbild führt, das auf den Betrachter angenehmer wirkt.

Unter elektrisch steuerbaren optischen Eigenschaften werden im Sinne der Erfindung solche Eigenschaften verstanden, die stufenlos steuerbar sind, aber gleichermaßen auch solche, die zwischen zwei oder mehr diskreten Zuständen geschaltet werden können.

Die elektrische Steuerung der Sonnenblende erfolgt beispielsweise mittels Schaltern, Dreh- oder Schiebereglern, die in den Armaturen des Fahrzeugs integriert sind. Es kann aber auch eine Schaltfläche zur Reglung der Sonnenblende in die Windschutzscheibe integriert sein, beispielsweise eine kapazitive Schaltfläche. Alternativ oder zusätzlich kann die Sonnenblende durch kontaktfreie Verfahren, beispielsweise durch das Erkennen von Gesten, oder in Abhängigkeit des durch eine Kamera und geeignete Auswerteelektronik festgestellten Zustands von Pupille oder Augenlid gesteuert werden. Alternativ oder zusätzlich kann die die Sonnenblende durch Sensoren, welchen einen Lichteinfall auf die Scheibe detektieren, gesteuert werden.

Der getönte oder gefärbte Bereich der Zwischenschicht weist bevorzugt eine Transmission im sichtbaren Spektralbereich von 10 % bis 50 % auf, besonders bevorzugt von 20% bis 40%. Damit werden besonders gute Ergebnisse erreicht hinsichtlich Blendschutz und optischem Erscheinungsbild.

Die Zwischenschicht kann durch eine einzelne thermoplastische Folie ausgebildet werden, in der der getönte oder gefärbte Bereich durch lokales Tönen oder Färben erzeugt wird. Solche Folien sind beispielsweise durch Koextrusion erhältlich. Alternativ können ein ungetönter Folienabschnitt und ein getönter oder gefärbter Folienabschnitt zur thermoplastischen Schicht zusammengesetzt werden.

Der getönte oder gefärbte Bereich kann homogen gefärbt oder getönt sein, das heißt eine ortsunabhängige Transmission aufweisen. Die Tönung oder Färbung kann aber auch inhomogenen sein, insbesondere kann ein Transmissionsverlauf realisiert sein. In einer Ausgestaltung nimmt der Transmissionsgrad im getönten oder gefärbten Bereich zumindest abschnittsweise mit steigendem Abstand zur Oberkante ab. So können scharfe Kanten des getönten oder gefärbten Bereichs vermieden werden, so dass der Übergang von der Sonnenblende in den transparenten Bereich der Windschutzscheibe graduell verläuft, was ästhetisch ansprechender aussieht.

In einer vorteilhaften Ausgestaltung ist der Bereich der ersten Zwischenschicht, also der Bereich zwischen dem Funktionselement und der Außenscheibe getönt. Dies bewirkt einen besonders ästhetischen Eindruck auf Draufsicht auf die Außenscheibe. Der Bereich der zweiten Zwischenschicht zwischen Funktionselement und Innenscheibe kann optional zusätzlich gefärbt oder getönt sein.

Die Verbundscheibe mit elektrisch steuerbarem Funktionselement kann vorteilhafterweise als Windschutzscheibe mit elektrisch steuerbarer Sonnenblende ausgebildet sein.

Eine solche Windschutzscheibe weist eine Oberkante und eine Unterkante auf sowie zwei zwischen Oberkante und Unterkante verlaufende Seitenkanten auf. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

Windschutzscheiben weisen ein zentrales Sichtfeld auf, an dessen optische Qualität hohe Anforderungen gestellt werden. Das zentrale Sichtfeld muss eine hohe Lichttransmission aufweisen (typischerweise größer als 70%). Das besagte zentrale Sichtfeld ist insbesondere dasjenige Sichtfeld, das vom Fachmann als Sichtfeld B, Sichtbereich B oder Zone B bezeichnet wird. Das Sichtfeld B und seine technischen Anforderungen sind in der Steuerung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge") festgelegt. Dort ist das Sichtfeld B in Anhang 18 definiert.

Das Funktionselement ist dann vorteilhafterweise oberhalb des zentralen Sichtfelds (Sichtfeld B) angeordnet. Das bedeutet, dass das Funktionselement im Bereich zwischen dem zentralen Sichtfeld und der Oberkante der Windschutzscheibe angeordnet ist. Das Funktionselement muss nicht den gesamten Bereich abdecken, ist aber vollständig innerhalb dieses Bereichs positioniert und ragt nicht in das zentrale Sichtfeld hinein. Anders ausgedrückt weist das Funktionselement einen geringeren Abstand zur Oberkante der Windschutzscheibe auf als der zentrale Sichtbereich. Somit wird die Transmission des zentralen Sichtfelds nicht durch das Funktionselement beeinträchtigt, welches an einer ähnlichen Stelle positioniert ist wie eine klassische mechanische Sonnenblende im heruntergeklappten Zustand.

Die Windschutzscheibe ist bevorzugt für ein Kraftfahrzeug vorgesehen, besonders bevorzugt für einen Personenkraftwagen.

In einer bevorzugten Ausgestaltung ist das Funktionselement, genauer die Seitenkanten des Funktionselements umlaufend von einer dritten Zwischenschicht umgeben. Die dritte Zwischenschicht ist rahmenartig ausgebildet mit einer Aussparung, in welche das Funktionselement eingelegt wird. Die dritte Zwischenschicht kann ebenfalls durch eine thermoplastische Folie gebildet werden, in welche die Aussparung durch Ausschneiden eingebracht worden ist. Alternativ kann die dritte Zwischenschicht auch aus mehreren Folienabschnitten um das Funktionselement zusammengesetzt werden. Die Zwischenschicht ist bevorzugt aus insgesamt mindestens drei flächig aufeinander angeordneten thermoplastischen Schichten gebildet, wobei die mittlere Schicht eine Aussparung ausweist, in der das Funktionselement angeordnet ist. Bei der Herstellung wird die dritte Zwischenschicht zwischen der ersten und der zweiten Zwischenschicht angeordnet, wobei die Seitenkanten aller Zwischenschichten bevorzugt in Deckung angeordnet sind. Die dritte Zwischenschicht weist bevorzugt etwa die gleiche Dicke auf wie das Funktionselement. Dadurch wird der lokale Dickenunterschied der Windschutzscheibe, der durch das örtlich begrenzte Funktionselement eingebracht wird, kompensiert, so dass Glasbruch beim Laminieren vermieden werden kann.

Die in Durchsicht durch die Windschutzscheibe sichtbaren Seitenkanten des Funktionselements sind bevorzugt bündig mit der dritten Zwischenschicht angeordnet, so dass zwischen der Seitenkante des Funktionselements und der zugeordneten Seitenkante der Zwischenschicht keine Lücke existiert. Das gilt insbesondere für die Unterkante des Funktionselements, die typischerweise sichtbar ist. So ist die Grenze zwischen dritter Zwischenschicht und Funktionselement optisch unauffälliger. Zusätzlich können die Kanten durch einen Schwarzdruck, beispielsweise auf der Außenseite der Scheibe kaschiert werden.

In einer bevorzugten Ausgestaltung sind die Unterkanten des Funktionselements und des getönten Bereichs der Zwischenschicht(en) an die Form der Oberkante der Windschutzscheibe angepasst, was ein optisch ansprechenderes Erscheinungsbild bewirkt. Da die Oberkante einer Windschutzscheibe typischerweise gebogen ist, insbesondere konkav gebogen, ist auch die Unterkante des Funktionselements und des getönten Bereichs bevorzugt gebogen ausgestalten. Besonders bevorzugt sind die Unterkanten des Funktionselements im Wesentlichen parallel zur Oberkante der Windschutzscheibe ausgebildet. Es ist aber auch möglich, die Sonnenblende aus zwei jeweils geraden Hälften aufzubauen, die in einem Winkel zueinander angeordnet sind und der Form der Oberkante v-förmig angenähert sind.

In einer Ausgestaltung ist das Funktionselement durch Isolierungslinien in Segmente aufgeteilt. Die Isolierungslinien sind insbesondere in die Flächenelektroden eingebracht sein, so dass die Segmente der Flächenelektrode elektrisch voneinander isoliert sind. Die einzelnen Segmente sind unabhängig voneinander mit der Spannungsquelle verbunden, so dass sie separat angesteuert werden können. So können verschiedene Bereich der Sonnenblende unabhängig geschaltet werden. Besonders bevorzugt sind die Isolierungslinien und die Segmente in Einbaulage horizontal angeordnet. Damit kann die Höhe der Sonnenblende vom Benutzer gesteuert werden. Der Begriff "horizontal" ist hier breit auszulegen und bezeichnet eine Ausbreitungsrichtung, die bei einer Windschutzscheibe zwischen den Seitenkanten der Windschutzscheibe verläuft. Die Isolierungslinien müssen nicht notwendigerweise gerade sein, sondern können auch leicht gebogen sein, bevorzugt angepasst an eine eventuelle Biegung der Oberkante der Windschutzscheibe, insbesondere im Wesentlichen parallel zur Oberkante der Windschutzscheibe. Vertikale Isolierungslinien sind ebenso möglich.

Die Isolierungslinien weisen beispielsweise eine Breite von 5 µm bis 500 µm, insbesondere 20 µm bis 200 µm auf. Die Breite der Segmente, also der Abstand benachbarten Isolierungslinien kann vom Fachmann gemäß den Anforderungen im Einzelfall geeignet gewählt werden.

Die Isolierungslinien können durch Laserablation, mechanisches Schneiden oder Ätzen während der Herstellung des Funktionselements eingebracht werden. Bereits laminierte Mehrschichtfolien können auch nachträglich noch mittels Laserablation segmentiert werden.

Die Oberkante und die Seitenkanten oder alle Seitenkanten des Funktionselements werden in Durchsicht durch die Verbundscheibe bevorzugt von einem opaken Abdeckdruck oder durch einen äußeren Rahmen verdeckt. Windschutzscheiben weisen typischerweise einen umlaufenden peripheren Abdeckdruck aus einer opaken Emaille auf, der insbesondere dazu dient, den zum Einbau der Windschutzscheibe verwendete Kleber vor UV-Strahlung zu schützen und optisch zu verdecken. Dieser periphere Abdeckdruck wird bevorzugt dazu verwendet, auch die Oberkante und die Seitenkante des Funktionselements zu verdecken, sowie die erforderlichen elektrischen Anschlüsse. Die Sonnenblende ist dann vorteilhaft ins Erscheinungsbild der Windschutzscheibe integriert und lediglich die Unterkante ist potentiell vom Betrachter zu erkennen. Bevorzugt weist sowohl die Außenscheibe als auch die Innenscheibe einen Abdeckdruck auf, so dass die Durchsicht von beiden Seiten gehindert wird.

Das Funktionselement kann auch Aussparungen oder Löcher aufweisen, etwa im Bereich sogenannter Sensorfenster oder Kamerafenster. Diese Bereiche sind dafür vorgesehen, mit Sensoren oder Kameras ausgestattet zu werden, deren Funktion durch ein steuerbares Funktionselement im Strahlengang beeinträchtigt werden würde, beispielsweise Regensensoren. Es ist auch möglich, die Sonnenblende mit mindestens zwei voneinander getrennten Funktionselementen zu realisieren, wobei zwischen den Funktionselementen ein Abstand besteht, der einen Raum für Sensor- oder Kamerafenster bereitstellt.

Das Funktionselement (oder die Gesamtheit der Funktionselemente im vorstehend beschriebenen Fall von mehreren Funktionselementen) ist bevorzugt über die gesamte Breite der Verbundscheibe beziehungsweise der Windschutzscheibe angeordnet, abzüglich eines beidseitigen Randbereichs mit einer Breite von beispielsweise 2 mm bis 20 mm. Auch zur Oberkante weist das Funktionselement bevorzugt einen Abstand von beispielsweise 2 mm bis 20 mm auf. Das Funktionselement ist so innerhalb der Zwischenschicht eingekapselt und vor Kontakt mit der umgebenden Atmosphäre und Korrosion geschützt.

Die Außenscheibe und die Innenscheibe sind bevorzugt aus Glas gefertigt, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Alumino-Sililat-Glas, oder aus starren klaren Kunststoffen, beispielsweise Polycarbonat oder Polymethylmethacrylat. Die Scheiben können klar sind, oder auch getönt oder gefärbt. Windschutzscheiben müssen dabei im zentralen Sichtbereich eine ausreichende Lichttransmission aufweisen, bevorzugt mindestens 70 % im Haupt-Durchsichtbereich A gemäß ECE-R43.

Die Außenscheibe, die Innenscheibe und/oder die Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen).

Die Dicke der Außenscheibe und der Innenscheibe kann breit variieren und so den Erfordernissen im Einzelfall angepasst werden. Die Außenscheibe und die Innenscheibe weisen bevorzugt Dicken von 0,5 mm bis 5 mm auf, besonders bevorzugt von 1 mm bis 3 mm.

Die Erfindung beruht auf der Erkenntnis der Erfinder, dass es vorteilhaft ist, wenn die Spannung am Funktionselement möglichst schnell ihr Maximum bzw. Minimum erreicht. Aufgrund der üblicherweise großen Kapazität des Funktionselements sind dazu große Schaltströme notwendig, die die Zuleitung, die Kontaktierung und die Flächenelektroden des Funktionselements stark erwärmen und dadurch zu einer schnellen Alterung des Funktionselements führen. Besonders kritisch sind dabei Stellen mit höheren Kontaktwiderständen, beispielsweise am Übergang der Zuleitungen zum Sammelleiter, der die Flächenelektroden kontaktiert oder am Übergang zwischen Sammelleiter und Flächenelektrode. Dort können lokal höhere Temperaturen auftreten, die die Flächenelektroden oder die aktive Schicht des Funktionselements schädigen oder vorzeitig altern lassen. Durch die erfindungsgemäße reduzierte Flankensteigung kann eine solche lokale Temperaturüberhöhung vermieden werden.

Wie bereits erwähnt, ist es für die optische Transparenz vorteilhaft, wenn die maximale bzw. minimale Spannung am Funktionselement möglichst schnell erreicht wird. Bei einem Rechteck- oder Trapezsignal kann der schnelle Übergang zwischen Flanke und Plateau zu Problemen in der elektromagnetischen Verträglichkeit (EMV) auf angrenzende Elektronik führen. Eine Abrundung des Übergangs verbessert die elektromagnetische Verträglichkeit durch die Reduzierung von Störsignalen.

Ein großer Vorteil der Erfindung besteht bei Verbundscheiben als Windschutzscheibe darin, dass auf eine klassische am Fahrzeugdach montierte, mechanisch klappbare Sonnenblende verzichtet werden kann.

Die Erfindung wird anhand von Ausführungsbeispielen näher erläutert. Die Figuren sind schematische Darstellungen und nicht maßstabsgetreu. Die Figuren schränken die Erfindung in keiner Weise ein. Es zeigen:
- Figur 1A: eine Draufsicht auf eine Ausgestaltung einer Vorrichtung zum Betreiben von Funktionselementen mit elektrisch steuerbaren optischen Eigenschaften,
- Figur 1B: einen Querschnitt durch die Verbundscheibe aus Figur 1A entlang der Schnittlinie X-X',
- Figur 1C: eine vergrößerte Darstellung des Bereichs Z aus Figur 1B,
- Figur 2A: ein Diagramm der Ausgangsspannung U in Abhängigkeit von der Zeit t,
- Figur 2B: einen vergrößerten Ausschnitt der Ausgangsspannung U in Abhängigkeit von der Zeit t aus dem Diagramm von Figur 2A,
- Figur 3: ein Diagramm der maximalen Ausgangsspannung Uₘₐₓ in Abhängigkeit von der Temperatur T.

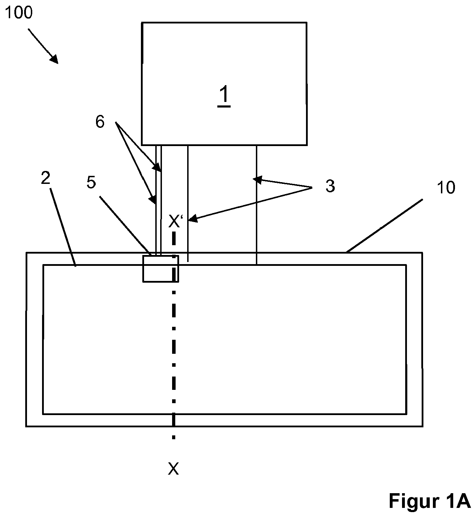

Figur 1A zeigt eine Vorrichtung 100 zum Betreiben eines Funktionselements 2 mit elektrisch steuerbaren optischen Eigenschaften. Die Vorrichtung 100 umfasst eine elektrische Energiequelle 1, die über zwei Zuleitungen 3 mit einem Funktionselement 2 elektrisch leitend verbunden ist. Das Funktionselement 2 ist hier beispielsweise im Inneren einer Verbundscheibe 10 angeordnet.

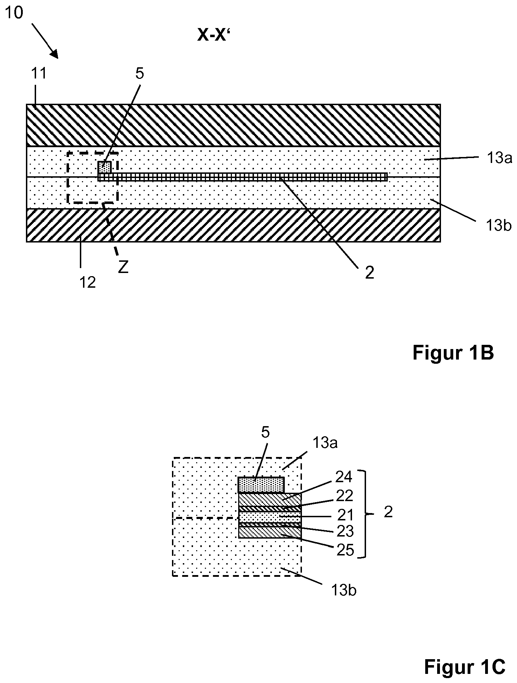

Figur 1 B zeigt einen Querschnitt durch eine Verbundscheibe 10. Die Verbundscheibe 10 umfasst eine Außenscheibe 11 und eine Innenscheibe 12, die über eine erste Zwischenschicht 13a und eine zweite Zwischenschicht 13b miteinander verbunden sind. Die Außenscheibe 11 weist eine Dicke von 2,1 mm auf und besteht beispielsweise aus einem klaren Kalk-Natron-Glas. Die Innenscheibe 12 weist eine Dicke von 1,6 mm auf und besteht beispielsweise ebenfalls aus einem klaren Kalk-Natron-Glas. Die Verbundscheibe 10 kann beispielsweise als Fahrzeugverglasung als Dachscheibe im Dach eines Kraftfahrzeugs angeordnet sein. In einem weiteren Ausgestaltungsbeispiel kann die Verbundscheibe 10 als Architekturverglasung in den Rahmen eines Fensters mit weiteren Scheiben zu einer Isolierverglasung angeordnet sein.

Zwischen der ersten Zwischenschicht 3a und der zweiten Zwischenschicht 3b ist ein Funktionselement 2 angeordnet, welches durch eine elektrische Spannung in seinen optischen Eigenschaften steuerbar ist.

Das steuerbare Funktionselement 2 ist beispielsweise eine PDLC-Mehrschichtfolie, bestehend aus einer aktiven Schicht 21 zwischen zwei Flächenelektroden 22, 23 und zwei Trägerfolien 24, 25. Die aktive Schicht 21 enthält eine Polymermatrix mit darin dispergierten Flüssigkristallen, die sich in Abhängigkeit der an die Flächenelektroden angelegten elektrischen Spannung ausrichten, wodurch die optischen Eigenschaften gesteuert werden können. Die Trägerfolien 24, 25 bestehen aus PET und weisen eine Dicke von beispielsweise 0,125 mm auf. Die Trägerfolien 24, 25 sind mit einer zur aktiven Schicht 21 weisenden Beschichtung aus ITO mit einer Dicke von etwa 100 nm versehen, welche die Flächenelektroden 22, 23 ausbilden. Die Flächenelektroden 22, 23 sind über nicht dargestellte Sammelleiter (beispielweise ausgebildet durch einen silberhaltigen Siebdruck) mit den Zuleitungen 3 und darüber mit der Energiequelle 1 elektrisch verbunden.

Die Zwischenschichten 13a, 13b umfassen jeweils eine thermoplastische Folie mit einer Dicke von 0,38 mm. Die Zwischenschichten 13a, 13b bestehen beispielsweise aus 78 Gew.-% Polyvinylbutyral (PVB) und 20 Gew.-% Triethylene glycol bis(2-ethylhexanoate) als Weichmacher.

Die elektrische Energiequelle 1 gibt eine Ausgangsspannung U aus, die über die Zuleitungen 3 an den Flächenelektroden 22, 23 des Flächenelements 2 angelegt wird und die durch die Höhe der Spannung die optischen Eigenschaften des Flächenelements 2, das heißt hier die Transparenz für sichtbares Licht, steuert.

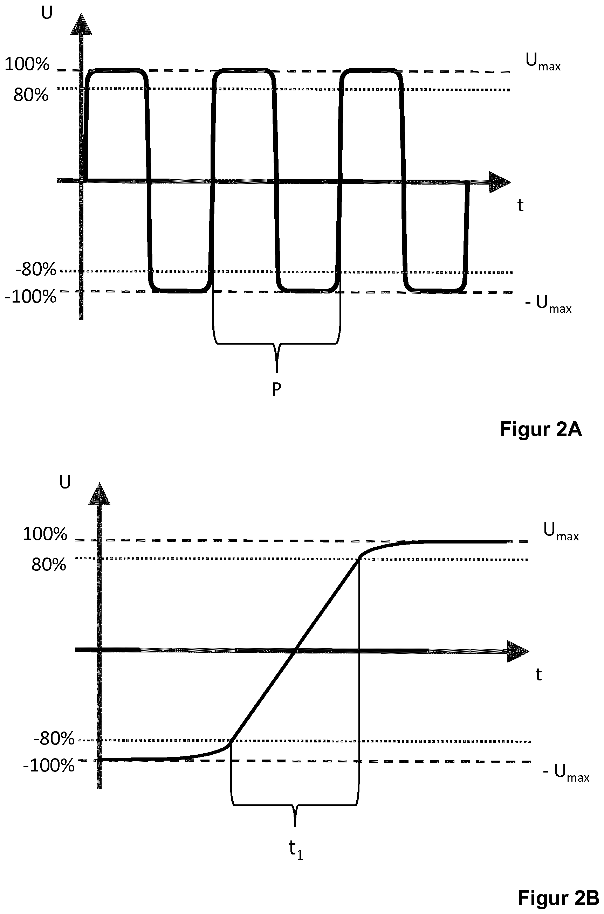

Figur 2A zeigt ein Diagramm der Ausgangsspannung U der Energiequelle 1 in Abhängigkeit von der Zeit t. Die Ausgangsspannung U wird von der Energiequelle 1 beim Betrieb der Vorrichtung, also bei verbundenem Funktionselement, ausgegeben.

Figur 2B zeigt einen vergrößerten Ausschnitt des Diagramms aus Figur 2A. Die Ausgangsspannung U ist im Wesentlichen eine trapezförmige Spannung mit leicht schrägen Flanken und abgerundeten Ecken. Die Ausgangsspannung U wechselt zwischen einem Minimalwert von -Uₘₐₓ (negative maximalen Ausgangsspannung) und einem Maximalwert von Uₘₐₓ (positive maximale Ausgangsspannung) und beispielsweise zwischen -65V und +65V.

Die Frequenz beträgt beispielsweises 50 Hz, so dass die Periodendauer P = 20ms beträgt.

Die Flankensteigung der Anstiegsflanke zwischen -80% Uₘₐₓ und + 80% Uₘₐₓ, also zwischen -52V und +52V beträgt 0,075* Uₘₐₓ/100µs, also 4,875 V/100µs. Die Anstiegszeit t₁, also die zeitliche Länge der Anstiegsflanke von -52V bis +52 V, beträgt daher 1066,6 µs. Die Flankensteigung der Abstiegsflanke zwischen 80% Uₘₐₓ und -80% Uₘₐₓ, also zwischen +52V und -52V beträgt beispielsweise -0,075*Uₘₐₓ/100µs, also -4,875 V/100µs. Die zeitliche Länge der Abstiegsflanke von +52V bis -52 V beträgt daher ebenfalls 1066,6 µs.

Die Flankensteigung nimmt für Werte zwischen 80% Uₘₐₓ und 100% Uₘₐₓ ab und ist deutlich kleiner als 0,075*Uₘₐₓ/100µs. Entsprechendes gilt für den Bereich zwischen 100%Uₘₐₓ bis 80%Uₘₐₓ, -80%Uₘₐₓ bis -100%Uₘₐₓ und -100%Uₘₐₓ bis -80%Uₘₐₓ. Durch die Abrundung der Ecken des Rechtecksignals wird die elektromagnetische Verträglichkeit (EMV) der Vorrichtung 100 verbessert und Störungen beispielsweise auf Elektronik in der Umgebung deutlich reduziert.

Durch die reduzierte Flankensteigung im Bereich zwischen -80% Uₘₐₓ und +80% Uₘₐₓ sowie zwischen 80% Uₘₐₓ und -80% Uₘₐₓ reduziert die Umladeströme des Schichtsystems und vermindert dadurch eine Erwärmung der Zuleitungen und der aktiven Schicht. Dadurch kann eine deutliche Alterungsbeständigkeit erzielt werden.

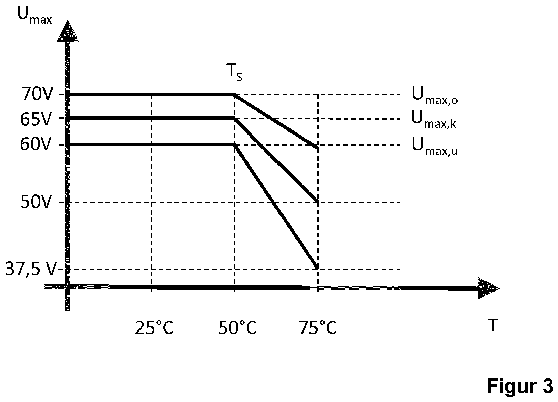

Figur 3 zeigt ein Diagramm der temperaturabhängigen maximalen Amplitude Uₘₐₓ der Ausgangsspannung U in Abhängigkeit von der Temperatur T.

Gemäß dem erfindungsgemäßen Verfahren wird die maximale Ausgangsspannung Uₘₐₓ der Ausgangsspannung U an die Temperatur T des Funktionselements 2 angepasst. Die Temperatur T wird durch ein Thermometer 5 gemessen, das hier beispielsweise unmittelbar am Funktionselement 2 angeordnet ist (siehe beispielsweise Figuren 1A, 1B und 1C).

Im hier dargestellten Beispiel ist unterhalb einer Schwellentemperatur T_{S} die maximale Amplitude Uₘₐₓ der Ausgangsspannung U konstant (=U_{max,k}). Oberhalb einer Schwellentemperatur Ts von beispielsweise 50°C wird die maximale Amplitude Uₘₐₓ erniedrigt. Die maximale Amplitude Uₘₐₓ beträgt für Temperaturen T, die größer sind als die Schwellentemperatur T_{S} beispielweise U_{max,k} - 1,0 V/°C * (T-T_{S}). Das heißt bei einer maximalen Ausgangsspannung Uₘₐₓ (im Temperaturbereich ≤ T_{S}) von 65 V und einer Temperatur T von 75°C beträgt die temperaturabhängige maximale Ausgangsspannung Uₘₐₓ beispielsweise 65 V-1 ,0°C*(75°C-50°C) = 40 V.

Wie Untersuchungen der Erfinder ergaben, reicht eine derartige temperaturabhängige maximale Ausgangsspannung Uₘₐₓ aus, um das gewünschte Schaltergebnis hinsichtlich der finalen optischen Eigenschaften zu erzielen, d.h. um vergleichbare Transparenzwerte und Opazitätswerte zu erzielen, wie bei höheren maximalen Ausgangsspannungen im niedrigeren Temperaturbereich. Gleichzeitig wird Energie zum Betrieb gespart und eine unnötige zusätzliche Erwärmung des Funktionselements reduziert, was deren Lebensdauer erhöht.

Ohne sich an eine Theorie binden zu wollen, kann dieses Verhalten in einem einfachen Modell verstanden werden: PDLC-Filme enthalten einen Polymer-Flüssigkristall-Film, der zwischen zwei transparenten Folien eingebettet ist. Innerhalb des festen Polymers befinden sich die willkürlich orientierten elektrisch polarisierten Flüssigkristallmoleküle, die sich bei Angelegen einer bestimmten Spannung in deren elektrischen Feld ausrichten lassen.

PDLC-Filme sind sehr sensibel gegenüber Temperaturänderungen. Dabei treten zwei konkurrierende Effekte auf. Bei steigenden Temperaturen erhöht sich die Eigenbewegung der polarisierten Flüssigkristallmoleküle, was deren Ausrichtung im elektrischen Feld erschwert. Gleichzeitig wird aber die Viskosität der Flüssigkristalle stark herabgesetzt, d.h. die Flüssigkristallmoleküle können leichter polarisiert und im elektrischen Feld ausgerichtet werden. Des Weiteren treten Phasenübergänge bei den Flüssigkristallmolekülen auf.

Wie die Erfinder überraschend festgestellt haben, ist bei höheren Temperaturen insgesamt ein geringeres elektrisches Feld und somit eine geringere Spannung notwendig, um vergleichbare Transparenzwerte und Opazitätswerte zu erzielen wie bei höheren maximalen Ausgangsspannungen im niedrigeren Temperaturbereich. Dadurch kann bei erhöhten Temperaturen Energie eingespart werden und der PDLC-Film wird durch Vermeidung von hohen Spannungen geschont, was seine Lebensdauer erhöht.

### Bezugszeichenliste:

- 1: Spannungsquelle
- 2: Funktionselement mit elektrisch steuerbaren optischen Eigenschaften
- 3: Zuleitung
- 5: Thermometer
- 6: Signalleitung
- 10: Verbundscheibe
- 11: Außenscheibe
- 12: Innenscheibe
- 13a: erste Zwischenschicht
- 13b: zweite Zwischenschicht
- 21: aktive Schicht des Funktionselements 5
- 22: Flächenelektrode des Funktionselements 5
- 23: Flächenelektrode des Funktionselements 5
- 24: Trägerfolie
- 25: Trägerfolie
- 100: Vorrichtung

- f: Frequenz
- g: Temperaturkoeffizient
- gₒ: oberer Temperaturkoeffizient
- gᵤ: unterer Temperaturkoeffizient
- P: Periodendauer
- t: Zeit
- t₁: Anstiegszeit
- T: Temperatur
- T_{S}: Schwellentemperatur
- U: Ausgangsspannung
- Uₘₐₓ: maximale Amplitude der Ausgangsspannung U
- U_{max,o}: obere maximale Amplitude der Ausgangsspannung U
- U_{max,u}: untere maximale Amplitude der Ausgangsspannung U
- U_{max,k}: maximale Amplitude der Ausgangsspannung U für Temperaturen T ≤ T_{S}
- X-X': Schnittlinie
- Z: vergrößerter Bereich

## Patentansprüche

1. Verfahren zur Steuerung einer Vorrichtung (100), umfassend:
- eine elektrische Energiequelle (1) zum Ausgeben einer Ausgangsspannung,
- mindestens ein Funktionselement (2) mit elektrisch steuerbaren optischen Eigenschaften,
- mindestens zwei Zuleitungen (3), mit denen die elektrische Energiequelle (1) und das Funktionselement (2) verbunden sind,
wobei am Funktionselement (2) ein Thermometer (5) angeordnet ist und das Thermometer (5) mit der elektrischen Energiequelle (1) gekoppelt ist,
wobei die Ausgangsspannung U eine trapezförmige Wechselspannung mit abgerundeten Ecken mit
- einer Frequenz f von 40 Hz bis 210 Hz,
- einer maximalen Amplitude Uₘₐₓ von 24 V bis 100 V,
- einer Flankensteigung im Bereich der Ausgangsspannung U zwischen -80% Uₘₐₓ und 80% Uₘₐₓ von 0,05*Uₘₐₓ/100 µs bis 0,1*Uₘₐₓ/100 µs und im Bereich der Ausgangsspannung U zwischen 80% Uₘₐₓ und -80% Uₘₐₓ von -0,05*Uₘₐₓ/100 µs bis -0,1*Uₘₐₓ/100 µs, wobei die Flankensteigung im Bereich zwischen -100% Uₘₐₓ bis -80% Uₘₐₓ sowie zwischen 80% Uₘₐₓ bis 100% Uₘₐₓ kleiner 0,05*Uₘₐₓ/100µs beträgt und zwischen 100% Uₘₐₓ bis 80% Uₘₐₓ sowie zwischen -80% Uₘₐₓ bis -100% Uₘₐₓ größer -0,05*Uₘₐₓ/100µs beträgt,
aufweist,
a) eine Temperatur T am Thermometer (5) gemessen wird und
b) die maximale Amplitude Uₘₐₓ der Ausgangsspannung U an die Temperatur angepasst wird, wobei ab einer bestimmten Schwellentemperatur T_{S} mit steigender Temperatur T am Thermometer (5) die maximale Ausgangsspannung Uₘₐₓ erniedrigt und bis zu einer bestimmten Schwellentemperatur T_{S} mit fallender Temperatur T die maximale Ausgangspannung Uₘₐₓ erhöht wird.

2. Verfahren zur Steuerung einer Vorrichtung (100) nach Anspruch 1, wobei das Funktionselement (2) flächenhaft ausgebildet ist.

3. Verfahren zur Steuerung einer Vorrichtung (100) nach Anspruch 1 oder 2, wobei das Funktionselement (2) eine Suspended Particle Device (SPD)-Folie oder eine Polymer Dispersed Liquid Crystal (PDLC)-Folie ist.

4. Verfahren zur Steuerung einer Vorrichtung (100) nach einem der Ansprüche 1 bis 3, wobei die Frequenz f von 45 Hz bis 105 Hz und bevorzugt von 49 Hz bis 69 Hz beträgt.

5. Verfahren zur Steuerung einer Vorrichtung (100) nach einem der Ansprüche 1 bis 4, wobei die maximale Amplitude Uₘₐₓ von 50 V bis 75 V und bevorzugt von 60 V bis 70 V beträgt.

6. Verfahren zur Steuerung einer Vorrichtung (100) nach einem der Ansprüche 1 bis 5, wobei die Flankensteigung im Bereich zwischen -90% Uₘₐₓ und -80% Uₘₐₓ sowie im Bereich von 80% Uₘₐₓ bis 90% Uₘₐₓ von 0,05*Uₘₐₓ/100µs bis 0,1*Uₘₐₓ/100µs beträgt.

7. Verfahren zur Steuerung einer Vorrichtung (100) nach einem der Ansprüche 1 bis 6, wobei die Flankensteigung im Bereich zwischen -100% Uₘₐₓ und -90% Uₘₐₓ sowie im Bereich von 90% Uₘₐₓ bis 100% Uₘₐₓ kleiner 0,05*Uₘₐₓ/100µs beträgt.

8. Verfahren zur Steuerung einer Vorrichtung (100) nach einem der Ansprüche 1 bis 7, wobei das Funktionselement (2) im Inneren einer Verbundscheibe (10) angeordnet ist und bevorzugt das Thermometer (5) im Inneren der Verbundscheibe (10) angeordnet ist.

9. Verfahren zur Steuerung einer Vorrichtung (100) nach einem der 1 bis 8, wobei
für T ≤ T_{S} gilt: Uₘₐₓ = U_{max,k} = konstant mit 50 V ≤ U_{max,k} ≤ 75 V und
für T > T_{S} gilt: 50 V - 1,5 V/°C * (T-T_{S}) ≤ Uₘₐₓ ≤ 75 V - 0,5 V/°C * (T-T_{S})
und T_{S}= konstant mit 40°C ≤ T_{S} ≤ 60°C.

10. Verfahren zur Steuerung einer Vorrichtung (100) nach Anspruch 9, wobei
für T ≤ T_{S} gilt: Uₘₐₓ = U_{max,k} = konstant mit 50 V ≤ U_{max,k} ≤ 75 V und
für T > T_{S} gilt: Uₘₐₓ = U_{max,k} + g (T-T_{S}) mit -1,5 V/°C ≤ g ≤ -0,5 V/°C
und T_{S}= konstant mit 40°C ≤ T_{S} ≤ 60°C.

11. Verfahren zur Steuerung einer Vorrichtung (100) nach Anspruch 9, wobei
für T ≤ Ts gilt: Uₘₐₓ = U_{max,k} = konstant mit 60 V ≤ U_{max,k} ≤ 70 V und
für T > T_{S} gilt: Uₘₐₓ = U_{max,k} + g (T-T_{S}) mit
g = konstant und -1,5 V/°C ≤ g ≤ -0,5 V/°C und
T_{S}= konstant mit 40°C ≤ T_{S} ≤ 60°C.

## Claims

1. Method for controlling a device (100), comprising:
- an electrical energy source (1) for outputting an output voltage U,
- at least one functional element (2) having electrically controllable optical properties,
- at least two supply lines (3), by means of which the electrical energy source (1) and the functional element (2) are connected,
wherein a thermometer (5) is arranged on the functional element (2) and the thermometer (5) is coupled to the power supply (1),
wherein the output voltage U has a trapezoidal alternating voltage with rounded corners having
- a frequency f of 40 Hz to 210 Hz,
- a maximum amplitude Uₘₐₓ of 24 V to 100 V,
- a slope in the range of the output voltage U between -80% Uₘₐₓ and 80% Uₘₐₓ of 0.05*Uₘₐₓ/100 µs to 0.1*Uₘₐₓ/100 µs and in the range of the output voltage U between 80% Uₘₐₓ and -80% Uₘₐₓ of -0.05*Uₘₐₓ/100 µs to -0.1*Uₘₐₓ/100 µs, wherein the slope in the range between -100% Uₘₐₓ to -80% Uₘₐₓ as well as between 80% Uₘₐₓ to 100% Uₘₐₓ is less than 0.05*Uₘₐₓ/100 µs and between 100% Uₘₐₓ to 80% Uₘₐₓ as well as between -80% Uₘₐₓ to -100% Uₘₐₓ is greater than -0.05*Umaₓ/100 µs,
a) a temperature T is measured at the thermometer (5), and
b) the maximum amplitude Uₘₐₓ of the output voltage U is adapted to the temperature, wherein from a certain threshold temperature T_{S} as the temperature T increases at the thermometer (5), the maximum output voltage Uₘₐₓ is lowered and up to a certain threshold temperature T_{S} as the temperature T drops, the maximum output voltage Uₘₐₓ is increased.

2. Method for controlling a device (100) according to claim 1, wherein the functional element (2) is planar.

3. Method for controlling a device (100) according to claim 1 or 2, wherein the functional element (2) is a suspended particle device (SPD) film or a polymer-dispersed liquid crystal (PDLC) film.

4. Method for controlling a device (100) according to one of claims 1 through 3, wherein the frequency f is from 45 Hz to 105 Hz and preferably from 49 Hz to 69 Hz.

5. Method for controlling a device (100) according to one of claims 1 through 4, wherein the maximum amplitude Uₘₐₓ is from 50 V to 75 V and preferably from 60 V to 70 V.

6. Method for controlling a device (100) according to one of claims 1 through 5, wherein the slope in the range between -90% Uₘₐₓ and -80% Uₘₐₓ as well as in the range from 80% Uₘₐₓ to 90% Uₘₐₓ is from 0.05*Uₘₐₓ/100 µs to 0.1*Uₘₐₓ/100 µs.

7. Method for controlling a device (100) according to one of claims 1 through 6, wherein the slope in the range between -100% Uₘₐₓ and -90% Uₘₐₓ as well as in the range from 90% Uₘₐₓ to 100% Uₘₐₓ is less than 0.05*Uₘₐₓ/100 µs.

8. Method for controlling a device (100) according to one of claims 1 through 7, wherein the functional element (2) is arranged inside a composite pane (10) and the thermometer (5) is preferably arranged inside the composite pane (10).

9. Method for controlling a device (100) according to one of claims 1 through 8, wherein
for T ≤ T_{S}: Uₘₐₓ = U_{max,k} = constant at 50 V ≤ U_{max,k} ≤ 75 V and
for T > T_{S}: 50 V - 1.5 V/°C * (T-T_{S}) ≤ Uₘₐₓ ≤ 75 V - 0.5 V/°C * (T-T_{S})
and T_{S} = constant at 40 °C ≤ T_{S} ≤ 60 °C.

10. Method for controlling a device (100) according to claim 9, wherein
for T ≤ T_{S}: Uₘₐₓ = U_{max,k} = constant at 50 V ≤ U_{max,k} ≤ 75 V and
for T > T_{S}: Uₘₐₓ = U_{max,k} + g (T-T_{S}) with -1.5 V/°C ≤ g ≤ -0.5 V/°C
and T_{S} = constant at 40 °C ≤ T_{S} ≤ 60 °C.

11. Method for controlling a device (100) according to claim 9, wherein
for T ≤ T_{S}: Uₘₐₓ = U_{max,k} = constant at 60 V ≤ U_{max,k} ≤ 70 V and
for T > T_{S}: Uₘₐₓ = U_{max,k} + g (T-T_{S}) with
g = constant and -1.5 V/°C ≤ g ≤ -0.5 V/°C and
T_{S} = constant at 40 °C < T_{S} ≤ 60 °C.

## Revendications

1. Procédé de commande d'un dispositif (100), comprenant :
- une source d'énergie électrique (1) pour délivrer une tension de sortie U,
- au moins un élément fonctionnel (2) ayant des propriétés optiques commandables électriquement,
- au moins deux lignes d'alimentation (3), au moyen desquelles la source d'énergie électrique (1) et l'élément fonctionnel (2) sont reliés,
un thermomètre (5) étant disposé sur l'élément fonctionnel (2) et le thermomètre (5) étant couplé à la source d'énergie électrique (1),
dans lequel la tension de sortie U a une tension alternative trapézoïdale avec des coins arrondis ayant
- une fréquence f de 40 Hz à 210 Hz,
- une amplitude maximale Uₘₐₓ de 24 V à 100 V,
- une pente dans la gamme de la tension de sortie U entre -80% Uₘₐₓ et 80% Uₘₐₓ de 0,05*Uₘₐₓ/100 µs à 0,1*Uₘₐₓ/100 µs et dans la gamme de la tension de sortie U entre 80% Uₘₐₓ et -80% Uₘₐₓ de -0,05*Uₘₐₓ/100 µs à -0,1*Uₘₐₓ/100 µs, dans lequel la pente dans la plage comprise entre -100% Uₘₐₓ à -80% Uₘₐₓ ainsi qu'entre 80% Uₘₐₓ à 100% Uₘₐₓ est inférieure à 0,05*Uₘₐₓ/100 µs et entre 100% Uₘₐₓ à 80% Uₘₐₓ ainsi qu'entre -80% Uₘₐₓ à -100% Uₘₐₓ est supérieure à -0,05*Uₘₐₓ/100 µs,
a) une température T est mesurée sur le thermomètre (5), et
b) l'amplitude maximale Uₘₐₓ de la tension de sortie U est adaptée à la température, dans laquelle à partir d'une certaine température seuil T_{S}, lorsque la température T augmente au niveau du thermomètre (5), la tension de sortie maximale Uₘₐₓ est abaissée et jusqu'à une certaine température seuil T_{S}, lorsque la température T diminue, la tension de sortie maximale Uₘₐₓ est augmentée.

2. Procédé de commande d'un dispositif (100) selon la revendication 1, dans lequel l'élément fonctionnel (2) est plan.

3. Procédé de commande d'un dispositif (100) selon la revendication 1 ou 2, dans lequel l'élément fonctionnel (2) est un film de dispositif à particules suspendues (SPD) ou un film de cristaux liquides dispersés dans un polymère (PDLC).

4. Procédé de commande d'un dispositif (100) selon l'une des revendications 1 à 3, dans lequel la fréquence f est comprise entre 45 Hz et 105 Hz et de préférence entre 49 Hz et 69 Hz.

5. Procédé de commande d'un dispositif (100) selon l'une des revendications 1 à 4, dans lequel l'amplitude maximale Uₘₐₓ est comprise entre 50 V et 75 V et de préférence entre 60 V et 70 V.

6. Procédé de commande d'un dispositif (100) selon l'une des revendications 1 à 5, dans lequel la pente dans la plage entre -90% Uₘₐₓ et -80% Uₘₐₓ ainsi que dans la plage de 80% Uₘₐₓ à 90% Uₘₐₓ est de 0,05*Uₘₐₓ/100 µs à 0,1*Uₘₐₓ/100 µs.

7. Procédé de commande d'un dispositif (100) selon l'une des revendications 1 à 6, dans lequel la pente dans la plage entre -100% Uₘₐₓ et -90% Uₘₐₓ ainsi que dans la plage de 90% Uₘₐₓ à 100% Uₘₐₓ est inférieure à 0,05 Uₘₐₓ/100 µs.

8. Procédé de commande d'un dispositif (100) selon l'une des revendications 1 à 7, dans lequel l'élément fonctionnel (2) est disposé à l'intérieur d'une vitre composite (10) et le thermomètre (5) est de préférence disposé à l'intérieur de la vitre composite (10).

9. Procédé de commande d'un dispositif (100) selon l'une des revendications 1 à 8, dans lequel
pour T ≤ T_{S}: Uₘₐₓ = U_{max,k} = constante à 50 V ≤ U_{max,k} ≤ 75 V et
pour T > Ts: 50 V - 1,5 V/°C * (T-T_{S}) ≤ Uₘₐₓ ≤ 75 V - 0,5 V/°C * (T-TS)
et T_{S} = constante à 40 °C ≤ T_{S} ≤ 60 °C.

10. Procédé de commande d'un dispositif (100) selon la revendication 9, dans lequel
pour T ≤ T_{S}: Uₘₐₓ = U_{max,k} = constante à 50 V ≤ U_{max,k} ≤ 75 V et
pour T > T_{S}: Uₘₐₓ = U_{max,k} + g (T-T_{S}) avec -1,5 V/°C ≤ g ≤ -0,5 V/°C
et T_{S} = constante à 40 °C ≤ T_{S} ≤ 60 °C.

11. Procédé de commande d'un dispositif (100) selon la revendication 9, dans lequel
pour T ≤ T_{S}: Uₘₐₓ = U_{max,k} = constante à 60 V ≤ U_{max,k} ≤ 70 V et
pour T > T_{S}: Uₘₐₓ = U_{max,k} + g (T-T_{S}) avec
g = constante et -1,5 V/°C ≤ g ≤ -0,5 V/°C et
et T_{S} = constante à 40 °C ≤ T_{S} ≤ 60 °C.
